Europäisches Patentamt

European Patent Office

Office européen des brevets

(11) Veröffentlichungsnummer: **0 031 306**
**B1**

(12) **EUROPÄISCHE PATENTSCHRIFT**

(45) Veröffentlichungstag der Patentschrift: 26.03.86

(21) Anmeldenummer: **80810400.4**

(22) Anmeldetag: **17.12.80**

(51) Int. Cl.⁴: **B 62 D 33/04**, B 62 D 31/02, B 60 R 13/08, B 62 D 27/04, B 61 D 15/06, B 61 D 17/18

(54) **Wagenkastenaufbau für Strassen- oder Schienenfahrzeuge.**

(30) Priorität: **20.12.79 CH 11326/79**

(43) Veröffentlichungstag der Anmeldung:
**01.07.81 Patentblatt 81/26**

(45) Bekanntmachung des Hinweises auf die Patenterteilung:
**26.03.86 Patentblatt 86/13**

(84) Benannte Vertragsstaaten:
**AT BE CH FR GB IT LI LU NL SE**

(56) Entgegenhaltungen:
DD-A- 121 073
DE-A-2 329 531
DE-A-2 616 457
FR-A- 662 829
FR-A- 957 010
FR-A-1 136 235
FR-A-2 288 660
FR-A-2 410 592
US-A-3 141 697
US-A-3 794 373
US-A-3 815 306

(73) Patentinhaber: **Schweizerische Aluminium AG
CH-8212 Neuhausen am Rheinfall (CH)**

(72) Erfinder: **Zehnder, Jürg
Husacherstrasse 2
CH-8142 Uitikon (CH)**
Erfinder: **Grischott, Jann
Breitigasse 7
CH-8610 Uster (CH)**

(74) Vertreter: **Hiebsch, Gerhard F., Dipl.-Ing.
Erzbergerstrasse 5A Postfach 464
D-7700 Singen 1 (DE)**

(56) References cited:
**REVUE GENERALE DES CHEMINS DE FER,
Band 98, Märznummer, 1979, R. AMET:
"Rajeunissement dans le parc autorails et
remorques de la S.N.C.F.I. Rénovation des
autorails X 2800. II. Construction des nouvelles
remorques XR 6000"**

Courier Press, Leamington Spa, England.

## Beschreibung

Die Erfindung betrifft einen Wagenkastenaufbau für Straßen- oder Schienenfahrzeuge mit einer aus einem Boden und wenigstens einem Querträger gebildeten ersten Baueinheit sowie einer aus einer Seitenwand und einem Längsträger gebildeten zweiten Baueinheit, wobei die beiden Baueinheiten durch Bolzenelemente lösbar aneinander festgelegt sind und die Bolzenelemente die Ausnehmungen in den Baueinheiten durchsetzen.

Einen derartigen Wagenkastenaufbau offenbaren die FR—A—2 288 660 und die DD—A—121 073. Die Seitenwände der dort beschriebenen Aufbauten können sich mittels Gleitführungen in ihrer Längsrichtung und vertikal relativ zum Untergestell um ein gewisses Maß bewegen, um die Verwindungsfähigkeit des Untergestells nicht zu beeinträchtigen.

Zur Verbesserung dieses Standes der Technik liegt der Erfindung die Aufgabe zugrunde, bei einem gattungsgemäßen Wagenkastenaufbau die Verbindung zwischen den beiden einander gegenüberstehenden Baueinheiten so auszubilden, daß bei Kollisionen oder Stößen von außen diese beiden Baueinheiten gegeneinander in Grenzen verschiebbar sind und zumindest geringe Kräfte ohne Deformation kompensieren können.

Zur Lösung dieser Aufgabe führt, daß die Ausnehmungen in den Baueinheiten als Langlöcher oder Nuten ausgebildet sind, die sich in der einen Baueinheit parallel zur Fahrzeuglängsachse und in der anderen Baueinheit quer dazu erstrecken, und daß die Bolzenelemente die beiden Baueinheiten derart reibschlüssig verbinden, daß bei Überwindung des Reibwiderstandes durch von außen auf den Längsträger einwirkende Kräfte eine Relativverschiebung zwischen dem Längsträger und dem Querträger ermöglicht wird. Zudem hat es sich als günstig erwiesen, die Ausnehmung der einen Baueinheit als Langloch und die Ausnehmung der anderen Baueinheit als hinterschnittene Nut auszubilden, wobei in letzterer ein an dem — einen Schraubbolzen darstellenden — Bolzenelement angebrachter Kopf verschieblich lagert.

Nach einem weiteren Merkmal der Erfindung durchsetzt das Bolzenelement bzw. der Schraubbolzen außerhalb des Langlochs eine Unterlegscheibe, welche im angezogenen Zustand mittels auf das Bolzenelement geschraubter Muttern an der Unterseite eines Steges des Querträgers reibschlüssig anliegt. Auch hat es sich als günstig erwiesen, daß zwischen den Baueinheiten ein elastisches Element abstandsbestimmend vorgesehen ist, das bevorzugt als Pufferprofil zwischen zwei parallel verlaufenden Längskanten des Längsträgers und des Bodens eingesetzt ist.

Mit Hilfe des Wagenkastenaufbaus ist es nunmehr vorteilhafterweise möglich geworden, während des Fahrbetriebs die Entstehung von Geräuschen am Wagenkastenaufbau sehr merkbar zu reduzieren. Sämtliche Seitenwandteile sowie die tragenden Stützen sind leicht demontierbar, so dass beschädigte Teile mit einem verhältnismässig geringen Aufwand an Kosten ausgewechselt werden können.

Auftretende Kräfte, die von aussen auf die Seitenwand wirken, werden nicht mehr direkt in den Boden eingeleitet, sondern über eine reibschlüssige Verbindung mit eingebauter Pufferzone auf eine minimale, den Boden in den meisten Fällen nicht beschädigende Kraft reduziert. Die Beschädigung des Wagenbodens wird somit bei normal auftretender Kollision weitmöglichst verhindert.

Die Erfindung wird nachfolgend anhand in der Zeichnung dargestellter bevorzugter Ausführungsbeispiele näher erläutert. Die Zeichnung zeigt in

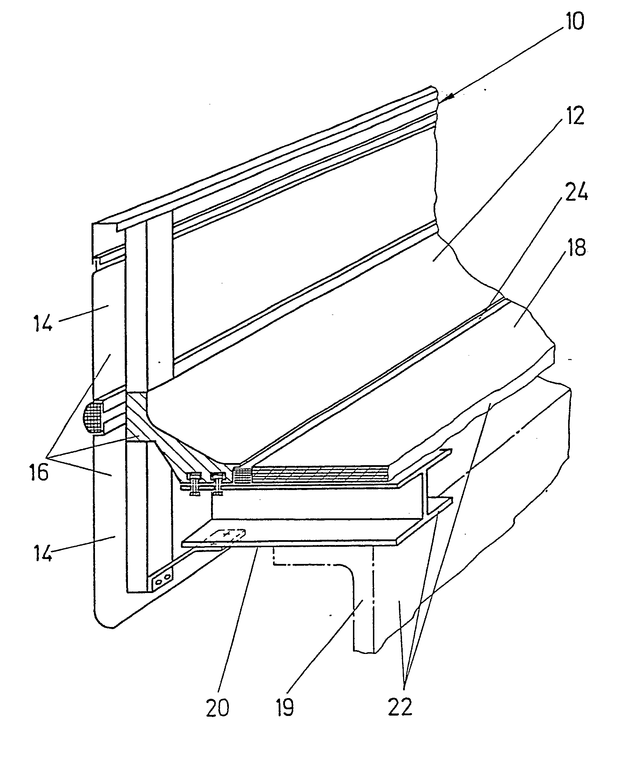

Fig. 1: eine Schrägsicht auf einen Teil eines Wagenkastenaufbaus mit Kastenboden und Seitenwand;

Fig. 2: einen Teilquerschnitt durch einen Längsträger des Wagenkastenaufbaus;

Fig. 3: einen Schnitt durch Fig. 2 nach deren Linie III—III;

Fig. 4: einen Schnitt durch den in Fig. 2 gezeigten Längsträger sowie durch einen Querträger gemäß Linie III—III in Fig. 2 in gegenüber dieser vergrösserter Wiedergabe;

Fig. 5: einen Schnitt durch den Längsträger mit einer in dessen Längsrichtung angeordneten elastischen Stossleiste;

Fig. 6: Ausführungsformen von federelastischen Verbindungen;

Fig. 7: eine Schrägsicht auf Teile des Wagenkastenaufbaus.

Bei einem Wagenkasten 10 eines Fahrzeugs bilden einerseits ein jeweils an einer Seite befindlicher Längsträger 12 mit einer Seitenwand 14 eine Baueinheit 16 sowie andererseits ein mit einem Chassis 19 fest verbundener Boden 18 mit einem Querträger 20 eine andere Baueinheit 22. Diese Baueinheiten 16 und 22 sind ihrerseits unter Zwischenschaltung eines elastischen Elementes 24 durch Klemmung reibschlüssig in einer vornehmlich horizontalen Ebene in einem vorbestimmten Bereich verschiebbar miteinander verbunden.

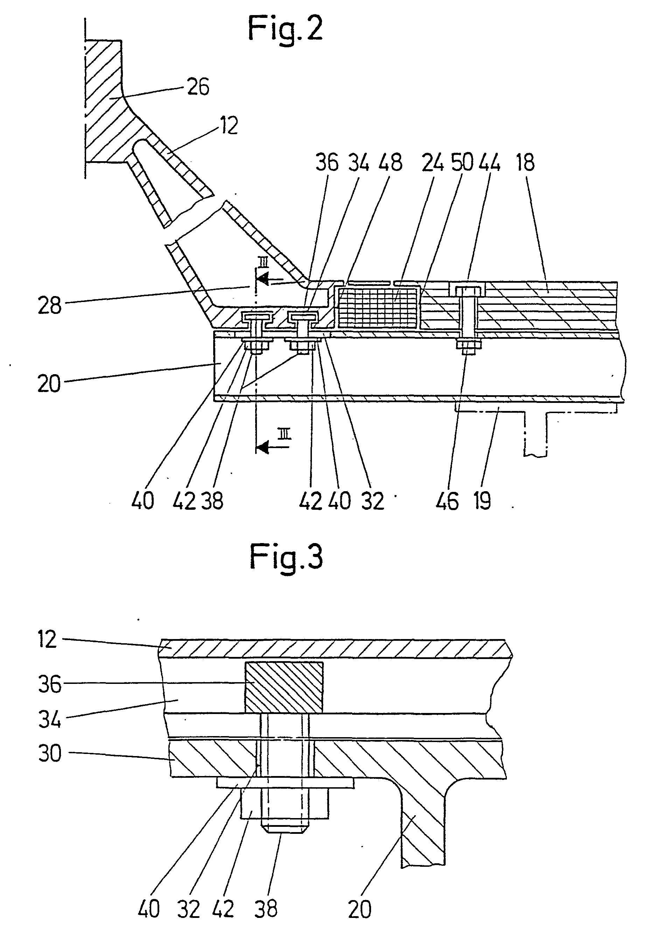

Gemäss Fig. 2, 3 weist der als Untergurt dienende Längsträger 12 einen rechtwinkeligen Querschnitt auf. An dessen vertikalen Schenkel 26 schliessen nach oben und unten hin Profilstäbe an, während andererseits mit dem vornehmlich horizontal verlaufenden Schenkel 28 des Langsträgers 12 die aus dem Boden 18, dem Chassis 19 und dem Querträger 20 bestehende Einheit 22 verbunden ist.

Die Querträger 20 sind an Stegen 30 mit Langlöchern 32 versehen, durch welche an der Unterseite des Längsträgers 12 in hinterschnittenen Nuten 34 mit ihren Köpfen 36 verschiebbar gelagerte Bolzenelemente 38 in Form von Schraubenbolzen hindurchgeführt sind, die auch Unterlagscheiben 40 durchsetzen. Letztere sind im angezogenen Zustand durch auf die Schraubenbolzen 38 geschraubte Muttern 42 der Unterseite jenes Steges 30 reibschlüssig angelegt und ermöglichen bei Überwindung des Reibwiderstandes durch von aussen auf den Längsträger 12 einwirkende Kräfte eine Relativverschiebung zwischen Längsträger 12 und Querträger 20.

Der Boden 18 ist plattenförmig ausgebildet und mit Hilfe von Schraubenbolzen 44 und Muttern 46 fest mit dem Querträger 20 verbunden.

Zwischen den beiden parallel verlaufenden Längskanten 48 und 50 des Längsträgers 12 einerseits sowie des Bodens 18 andererseits ist das aus einem elastischen Material bestehende Element 24 eingesetzt worden, um zu verhindern, dass sich bei Kollisionen Deformationskräfte von Längsträger 12 des Wagenkastens 10 auf den schwingungsarm ausgebildeten Boden 18 übertragen.

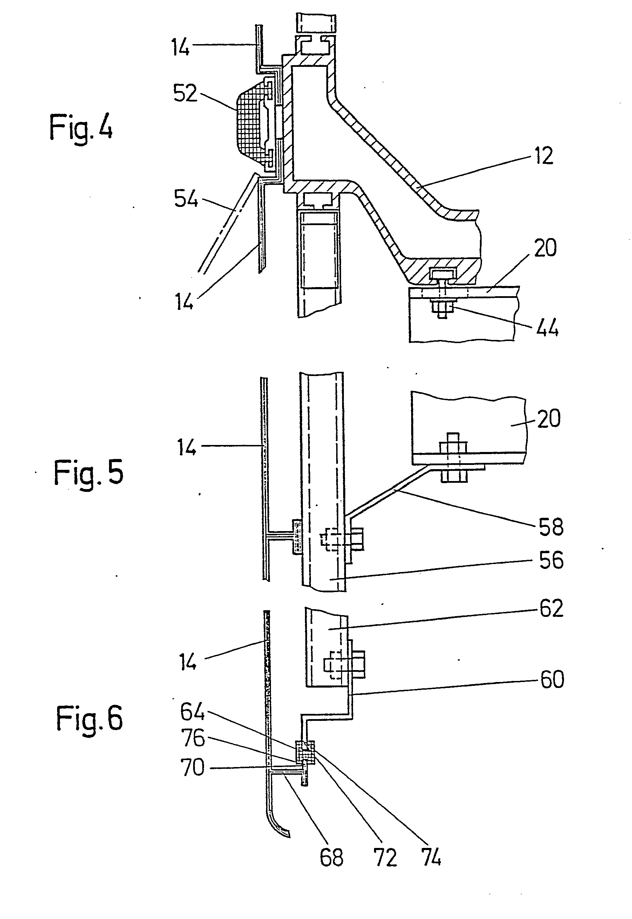

Bei einem weiteren Ausführungsbeispiel gemäss Fig. 4 ist an der Aussenseite des Längsträgers 12 eine stossdämpfende Leiste 52 aus elastischem Material befestigt, unter der in einem bestimmten Bereich — in einer nicht näher dargestellten Weise — ein verschwenkbarer Teil in Form einer Klappe 54 zum Öffnen oder Verschliessen eines — ebenfalls nicht näher dargestellten — Faches drehbar gelagert befestigt ist.

Nach Fig. 5 ist einmal an der Unterseite des Querträgers 20 und zum anderen an der Innenseite eines Trägers 56 des Wagenkastens 10 jeweils ein Ende einer rechtwinklig abgebogenen Blattfeder 58 befestigt. Auch mit dieser soll verhindert werden, dass sich jene Deformationskräfte auf den schwingungsarm ausgebildeten Boden 18 übertragen.

Zu gleichem Zwecke ist bei einem Ausführungsbeispiel nach Fig. 6 eine S-förmig gebogene Blattfeder 60 mit einem Ende an einem Träger 62 des Wagenkastens 10 und mit dem anderen Ende über ein bandförmiges elastisches Element 64 mit dem unteren Ende einer Seitenwand 14 verbunden.

An der Innenseite der Seitenwand 14 sitzt ein in Längsrichtung verlaufender T-förmiger Steg 68, dessen oberes Ende 70 dem unteren Ende 72 der S-förmig gebogenen Blattfeder 60 gegenübersteht.

Das zwischen dem unteren Ende 72 der S-förmig gebogenen Blattfeder 60 und dem oberen Ende 70 des Steges 68 der Seitenwand 14 eingesetzte bandförmige, elastische Element 64 weist zwei Längsnuten 74 und 76 auf, in welche jeweils einmal das untere Ende 72 der S-förmig gebogenen Blattfeder 60 und zum anderen das obere Ende 70 des Steges 68 der Seitenwand 14 eingesetzt ist.

Durch das bandförmige Element 64 wird die Übertragung von während des Fahrbetriebes am Chassis 19 entstehenden, unerwünschte Geräuse verursachenden Schwingungen auf die Seitenwände 14 wirksam gedämpft.

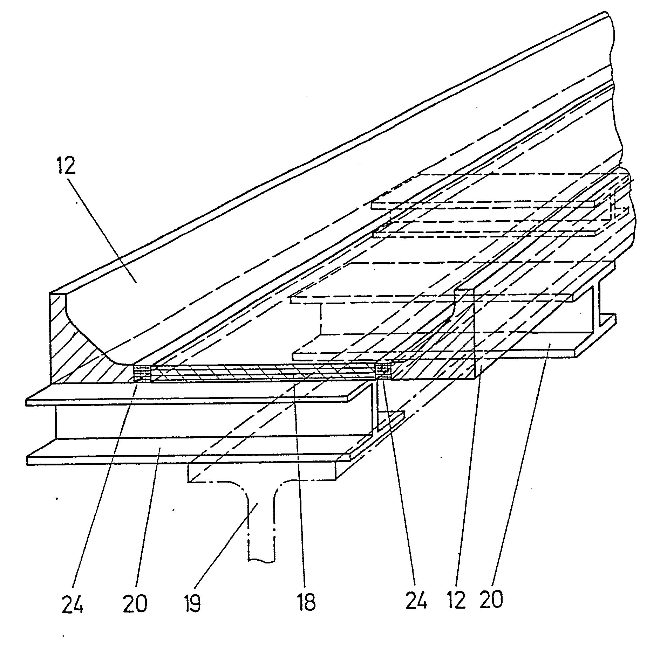

Aus Fig. 7 ist im wesentlichen die Anordnung und Ausbildung der Bestandteile des Chassis 19 bildenden Querträger 20 zu ersehen, welche sich — in der Längsrichtung des Wagenkastens 10 gesehen — abwechselnd einmal von dem linken Längsträger 12 bis zu dem an der rechten Seite des Bodens 18 befindlichen elastischen Element 24 und zum anderen von dem rechten Längsträger 12 bis zu dem an der linken Seite des Bodens 18 befindlichen elastischen Element 24 erstrecken.

**Patentansprüche**

1. Wagenkastenaufbau für Straßen- oder Schienenfahrzeuge mit einer aus einem Boden (18) und wenigstens einem Querträger (20) gebildeten ersten Baueinheit (22) sowie einer aus einer Seitenwand (14) und einem Längsträger (12) gebildeten zweiten Baueinheit (16), wobei die beiden Baueinheiten (16, 22) durch Bolzenelemente (38) lösbar aneinander festgelegt sind und die Bolzenelemente die Ausnehmungen (32 bzw. 34) in den Baueinheiten (16, 22) durchsetzen, dadurch gekennzeichnet, daß die Ausnehmungen in den Baueinheiten (16, 22) als Langlöcher (32) oder Nuten (34) ausgebildet sind, die sich in der einen Baueinheit parallel zur Fahrzeuglängsachse und in der anderen Baueinheit quer dazu erstrecken, und daß die Bolzenelemente (38) die beiden Baueinheiten (16, 22) derart reibschlüssig verbinden, daß bei Überwindung des Reibwiderstandes durch von außen auf den Längsträger (12) einwirkende Kräfte eine Relativverschiebung zwischen dem Längsträger (12) und dem Querträger (20) ermöglicht wird.

2. Wagenkastenaufbau nach Anspruch 1, dadurch gekennzeichnet, daß die Ausnehmung der einen Baueinheit (22) als Langloch (32) und die Ausnehmung der anderen Baueinheit (16) als hinterschnittene Nut (34) ausgebildet ist, wobei in letzterer ein an dem einen Schraubbolzen darstellenden Bolzenelement (38) angebrachter Kopf (36) verschieblich lagert.

3. Wagenkastenaufbau nach Anspruch 1 oder 2, dadurch gekennzeichnet, dass das Bolzenelement bzw. der Schraubbolzen (38) ausserhalb des Langlochs (32) eine Unterlegscheibe (40) durchsetzt, welche im angezogenen Zustand mittels auf das Bolzenelement geschraubter Muttern (42) an der Unterseite eines Steges (30) des Querträgers (20) reibschlüssig anliegt.

4. Wagenkastenaufbau nach Anspruch 2 oder 3, dadurch gekennzeichnet, dass die hinterschnittene Nut (34) im Längsträger (12) und/oder die Langlöcher (32) im Querträger (20) vorgesehen sind.

5. Wagenkastenaufbau nach einem der Ansprüche 1 bis 4, dadurch gekennzeichnet, dass zwischen den Baueinheiten (16 und 22) ein elastisches Element (24) abstandsbestimmend vorgesehen ist.

6. Wagenkastenaufbau nach Anspruch 5, dadurch gekennzeichnet, dass das elastische Element (24) als Pufferprofil zwischen zwei parallel verlaufenden Längskanten (48, 50) des Längsträgers (12) und des Bodens (18) eingesetzt ist.

7. Wagenkastenaufbau nach wenigstens einem der Ansprüche 1 bis 6, dadurch gekennzeichnet, dass zum einen am Querträger (20) und zum anderen an einem Träger (56) eines Wagenkastengerippes jeweils die beiden Enden einer Feder (58) befestigt sind.

8. Wagenkastenaufbau nach wenigstens einem der Ansprüche 1 bis 6, dadurch gekennzeichnet, dass zum einen an einem Träger (62) des Wagenkastengerippes und zum anderen im unteren Bereich einer Seitenwand (14) jeweils die beiden Enden einer Feder (60) befestigt sind.

9. Wagenkastenaufbau nach Anspruch 5 oder 6, dadurch gekennzeichnet, dass beiden Enden der Querträger (20) Seitenwände (14) zugeordnet und die Querträger auf einem Chassis (19) befestigt sind sowie sich wechselweise vom linken Längsträger (12) bis zu dem an der rechten Seite des Kastenbodens (18) befindlichen elastischen Element (24) und vom rechten Längsträger (12) bis zu dem an der linken Seite des Kastenbodens (18) befindlichen elastischen Element (24) erstrecken.

**Revendications**

1. Carrosserie pour véhicules routiers ou ferrés, comportant un premier ensemble (22) constitué d'un plancher (18) et au moins d'une traverse (20) ainsi qu'un second ensemble (16) constitué d'une paroi latérale (14) et d'un longeron (12), étant précisé que les deux ensembles (16, 22) sont fixés l'un à l'autre, de façon amovible, par des éléments de boulonnage (38) et que les éléments de boulonnage traversent les logements (32 et 34) dans les ensembles (16, 22), caractérisée, en ce que les logements dans les ensembles (16, 22) sont conçus sous forme de lumières (32) ou de rainures (34) qui s'étendent, dans l'un des ensembles, parallèlement à l'axe longitudinal du véhicule et, dans l'autre ensemble, transversalement à cet axe; et en ce que les éléments de boulonnage (38) réalisent une liaison par frottement des deux ensembles (16, 22) de façon telle qu'en cas de dépassement de la résistance de frottement par des forces agissant de l'extérieur sur le longeron (12), un glissement relatif est permis entre le longeron (12) et la traverse (20).

2. Carrosserie selon la revendication 1, caractérisée en ce que le logement dans l'un des ensembles (22) est conçu sous forme de lumière (32) et le logement dans l'autre ensemble (16) sous forme de rainure chambrée (34), étant précisé que dans cette dernière peut coulisser une tête (36) rapportée sur l'élément de boulonnage (38) représentant un boulon fileté.

3. Carrosserie selon la revendication 1 ou la revendication 2, caractérisée en ce que l'élément de boulonnage ou le boulon fileté (38) traverse, en plus de la lumière (32), une rondelle d'appui (40) qui, à l'état serré, s'appuie, en réalisant une liaison par frottement, au moyen d'écrous (42) vissés sur l'élément de boulonnage, contre la face inférieure d'une aile (30) de la traverse (20).

4. Carrosserie selon la revendication 2 ou la revendication 3, caractérisée en ce que la rainure chambrée (34) est prévue dans le longeron (12) et/ou les lumières (32) le sont dans la traverse (20).

5. Carrosserie selon l'une des revendications 1 à 4, caractérisée en ce qu'entre les ensembles (16 et 22) est prévu un élément élastique (24) qui détermine leur écartement.

6. Carrosserie selon la revendication 5, caractérisée en ce que l'élément élastique (24) est inséré, sous forme de profil-tampon, entre deux bords longitudinaux (48, 50), courant parallèlement, du longeron (12) et du plancher (18).

7. Carrosserie selon au moins l'une des revendications 1 à 6, caractérisée en ce que les deux extrémités d'un ressort (58) sont respectivement fixées d'une part à la traverse (20) et d'autre part à un montant (56) d'une ossature de carrosserie.

8. Carrosserie selon au moins l'une des revendications 1 à 6, caractérisée en ce que les deux extrémités d'un ressort (60) sont respectivement fixées d'une part à un montant (62) d'une ossature de carrosserie et d'autre part dans la zone inférieure d'une paroi latérale (14).

9. Carrosserie selon la revendication 5 ou la revendication 6, caractérisée en ce que des parois latérales (14) correspondent aux deux extrémités des traverses (20); et en ce que les traverses sont fixées sur un châssis (19) et s'étendent alternativement depuis le longeron gauche (12) jusqu'à l'élément élastique (24) qui se trouve du côté droit du plancher (18) et depuis le longeron droit (12) jusqu'à l'élément élastique (24) qui se trouve du côté gauche du plancher (18).

**Claims**

1. A car body superstructure for road or rail vehicles having a first structural unit (22) formed from a floor (18) and at least one crossbeam (20) as well as a second structural unit (16) formed from a sidewall (14) and a longitudinal beam (12), in which the two structural units (16, 22) are fastened together detachably by bolt members (38) and the bolt members pass through openings (32 and 34 resp.) in the structural units (16, 22), characterized in that the openings in the structural units (16, 22) are made as oblong holes (32) or grooves (34) which extend in the one structural unit in parallel with the longitudinal axis of the vehicle and transversely to it in the other structural unit, and that the bolt members (38) connect the two structural units (16, 22) with a friction fit in such a way that upon the frictional resistance being overcome by forces acting from without upon the longitudinal beam (12), relative shifting is made possible between the longitudinal beam (12) and the crossbeam (20).

2. A car body superstructure as in Claim 1, characterized in that the opening in the one structural unit (22) is made as an oblong hole (32) and the opening in the other structural unit (16) is made as an undercut groove (34) so that in the latter a head (36) mounted on the bolt member (38) exhibiting a threaded bolt is supported so as to be able to shift.

3. A car body superstructure as in Claim 1 or 2, characterized in that the bolt member or respectively the threaded bolt (38) outside the oblong hole (32) passes through a washer (40) which in the screwed-down state rests with a friction fit against the underside of a flange (30) of the crossbeam (20) by means of nuts (42) screwed onto the bolt member.

4. A car body superstructure as in Claim 2 or 3, characterized in that the undercut groove (34) is provided in the longitudinal beam (12) and/or the oblong holes (32) are provided in the crossbeam (20).

5. A car body superstructure as in one of the Claims 1 to 4, characterized in that between the structural units (16 and 22) a resilient member (24) is provided to determine a clearance.

6. A car body superstructure as in Claim 5, characterized in that the resilient member (24) is inserted as a buffer profile between two longitudinal edges (48, 50) running in parallel on the longitudinal beam (12) and the floor (18).

7. A car body superstructure as in at least one of the Claims 1 to 6, characterized in that the two ends of a spring (58) are fastened firstly to the crossbeam (20) and secondly to one beam (56) of a car body framework respectively.

8. A car body superstructure as in at least one of the Claims 1 to 6, characterized in that the two ends of a spring (60) are fastened firstly to one beam (62) of the car body framework and secondly in the lower region of one sidewall (14) respectively.

9. A car body superstructure as in Claim 5 or 6, characterized in that sidewalls (14) are associated with both ends of the crossbeams (20) and the crossbeams are fastened to a frame (19) and also extend alternately from the lefthand longitudinal beam (12) over to the resilient member (24) lying at the righthand side of the body floor (18) and from the right hand longitudinal beam (12) over to the resilient member (24) lying at the lefthand side of the body floor (18).

## Fig. 2

## Fig. 3

Fig. 4

Fig. 5

Fig. 6